# EUROPÄISCHE PATENTSCHRIFT

(11) **EP 2 121 845 B1**
(45) Veröffentlichungstag und Bekanntmachung des Hinweises auf die Patenterteilung: **02.10.2013**
(21) Anmeldenummer: 07856140.4
(22) Anmeldetag: 20.12.2007
(51) Int. Cl.: C08L 79/04, C09J 7/04, C08G 73/06, B32B 27/08, B32B 27/12, C09D 179/04, B32B 27/18, B32B 27/20

(54) **POLYMERFILM ZUR OBERFLÄCHENBESCHICHTUNG VON FASER-KUNSTSTOFF-VERBUNDWERKSTOFFEN**
POLYMER FILM FOR SURFACE-COATING COMPOSITE FIBER-PLASTIC MATERIALS
FILM POLYMÈRE DESTINÉ AU REVÊTEMENT SUPERFICIEL DE MATÉRIAUX COMPOSITES À BASE DE FIBRES ET DE PLASTIQUE

(30) Priorität: 22.12.2006 DE 102006062248; 31.01.2007 DE 102007004901
(43) Veröffentlichungstag der Anmeldung: 25.11.2009
(60) Teilanmeldung: 11009022.2
(73) Patentinhaber: Mankiewicz Gebr. & Co. GmbH & Co KG, 21107 Hamburg (DE)
(72) Erfinder: BAUER, Monika, 15754 Königs Wusterhausen OT Senzig (DE); KARL, Hans-Jürgen, 20249 Hamburg (DE); WURZEL, Rajko, 14199 Berlin (DE)
(86) Internationale Anmeldenummer: PCT/DE2007/002296
(87) Internationale Veröffentlichungsnummer: WO 2008/077385

(56) Entgegenhaltungen:
- EP-A- 0 295 375
- EP-A- 0 581 314
- EP-A- 1 710 264
- EP-A- 1 854 828
- US-A- 4 940 848
- BAUER M ET AL: "Networks from dicyanate of bisphenol A and diphenols" 1. Januar 1991 (1991-01-01), MAKROMOLEKULARE CHEMIE, MACROMOLECULAR SYMPOSIA, HUTHIG UND WEPF VERLAG. BASEL, CH, PAGE(S) 97 - 103 , XP009087791 Seite 98, Spalte 2 - Seite 102, linke Spalte; Abbildungen
- FANG ET AL: "Polycyanate esters: Science and applications" 1. Januar 1995 (1995-01-01), PROGRESS IN POLYMER SCIENCE, PERGAMON PRESS, OXFORD, GB, PAGE(S) 61 - 118 , XP005900012 ISSN: 0079-6700 Seite 103, Absatz 5 - Seite 109, Absatz 1

## Beschreibung

Die Erfindung betrifft die Verwendung einer Harzmatrix zur Herstellung eines substratgestützten Polymerfilms zur Oberflächenbeschichtung von Faser-Kunststoff-Verbundwerkstoffen und ein Verfahren zur Beschichtung von Faser-Kunststoff-Verbundwerkstoffen, welche unter Einsatz von Prepreg hergestellt werden.

Faser-Kunststoff-Verbundwerkstoffe werden aufgrund ihrer günstigen Eigenschaften wie ihres geringen Gewichts und ihrer hohen Zugfestigkeit in weiten Bereichen der Luftfahrttechnik eingesetzt. So werden sie z.B. im Innenraumausbau von Passagierflugzeugen eingesetzt. Diese sogenannten Interior-Bauteile wie beispielsweise Seitenwände oder Hatrack-Klappen müssen eine besondere Oberflächenqualität aufweisen, da sie sich direkt im Blickfeld der Passagiere befinden.

Um möglichst gute mechanische Eigenschaften bei möglichst geringem Gewicht zu erreichen, werden die Bauteile üblicherweise als Sandwichaufbau hergestellt. Dabei werden Waben aus phenolharz-imprägniertem Papier (beispielsweise unter dem Handelsnamen Nomex-Waben bekannt) als Kern und dünne Lagen an Prepreg verwendet.

Prepreg bezeichnet ein Halbzeug, welches aus Endlosfasern und einer ungehärteten duroplastischen Kunststoffmatrix besteht. Die Endlosfasern können als unidirektionale Schicht, als Gewebe oder als Gelege vorliegen. Übliche Fasertypen sind z.B. Glasfasern, Kohlenstofffasern oder Aramidfasern. Glasfasern sind gängig.

Die Kunststoffmatrix enthält eine Mischung von Harz und Härter und gegebenenfalls Beschleunigern. Der Härter und gegebenenfalls der Beschleuniger bestimmen die Aushärtetemperatur, d.h. die Temperatur, bei welcher der Aushärtungsprozess beginnt. Die Matrixsysteme werden nach ihrer Aushärtetemperatur und dem Harztyp unterschieden.

Aus EP 1854828 sind Prepregs zur Herstellung von Sandwichbauteilen bekannt, die ein textiles Flächengebilde in einer Harzmatrix aufweisen, wobei die Harzmatrix ein Prepolymer ist, das unter Verwendung von di- oder polyfunktionellen organischen Cyanaten und di- oder polyfunktionellen aromatischen Alkoholen hergestellt wurde.

Dabei sind Netzwerke aus Dicyanaten des Bisphenols A und Diphenolen bekannt, welche durch Copolycyclotrimerisation von aromatischen Dicyanaten und Diphenolen hergestellt werden (vgl. Bauer et al.; Networks from Dicyanate of Bisphenol A and Diphenols; Makromol. Chem. Macromol. Symp. 45; 97-103 (1991).

Weiterhin sind aus EP 0295375 cyanatfunktionelle Harzkleber und Matrixharzfilme sowie Prepregs bekannt, welche zur längeren Erhaltung ihres Tacks mit Silicon beschichtete Trennpapiere oder Trennfolien aufweisen, wobei die die Siliconbeschichtung keine oder nur geringe Rückstände eines Metallkatalysators enthält.

Zur Herstellung der Sandwichbauteile werden mehrere verschiedene Verfahren eingesetzt. In den Verfahren wird das Bauteil durch Einpassen des oben genannten Aufbaus in die Form und das Aushärten in der Form erhalten.

Im Vakuumsackverfahren wird zunächst Prepreg in die Form gelegt, darauf die Waben und anschließend wieder Prepreg. Die Form wird dann in einen Vakuumsack verbracht und Vakuum wird angelegt. Wenn sich der Aufbau an die Form angepasst hat, wird die Form erwärmt, um die Aushärtung zu starten. Die Starttemperatur hängt dabei vom eingesetzten Matrixsystem ab.

Eine weitere Variante des Vakuumsackverfahrens ist das so genannte Autoklavverfahren. Hierin wird der den Aufbau enthaltende, evakuierte Vakuumsack in einem Autoklaven unter erhöhtem Druck und erhöhter Temperatur ausgehärtet.

Im Heißpressverfahren wird der Aufbau Prepreg - Wabe - Prepreg in eine erwärmte Form gebracht und unter Druck verpresst. Im Unterschied zum Vakuumsackverfahren ist hier die Form schon auf der zum Aushärten benötigten Temperatur, so dass der sandwichaufbau vor dem Einlegen in die Form hergestellt werden muss.

Die Flammfestigkeit spielt bei Luftfahrtbauteilen insbesondere bei Interior-Bauteilen eine große Rolle. Die Flammfestigkeit ist die Eigenschaft von Werkstoffen, Produkten oder Bauteilen, der Einwirkung von Flammen oder zündquellen zu widerstehen bzw. die Fähigkeit, auf energetischem, kinetischem, chemischen oder mechanischem Weg die Ausbreitung von Feuer zu verhindern.

Der Begriff ist nicht genormt und die Eigenschaft als solche nicht messbar (vgl. Römpp-Lexikon Lacke und Druckfarben; Hrsg. U. Zorll, Thieme Verlag Stuttgart New York, 1998; Kunststoff-Kompendium, A. Franck, Vogel Buchverlag, Würzburg, 1996). Die Prüfverfahren für die Flammfestigkeit ahmen unter reproduzierbaren Bedingungen die Verhältnisse bei einem praktischen Brand nach. Dabei werden je nach Prüfverfahren unterschiedliche physikalisch-chemische Daten erfasst wie beispielsweise die Entflammungs- und Entzündungstemperatur oder die Zusammensetzung der Pyrolysatdämpfe.

Um die Anforderungen an die FST-Eigenschaften (**F**lammability, **S**moke, **T**oxicity) im Kabinenbereich der zivilen Luftfahrt zu erfüllen, wird üblicherweise Prepreg auf der Basis von Phenol-Formaldehyd-Harzen (kurz: Phenolharze) als Material für die Interior-Bauteile eingesetzt. Phenolharze weisen an sich ein für diese Anwendung geeignetes Brandverhalten auf: sie entwickeln im Brand weniger toxische Gase als andere Duroplaste und verlöschen beim Wegnehmen der Flamme.

Phenolharze gehören zu den klassischen Kondensationsharzen, d.h. sie polymerisieren bzw. vernetzen unter Abspaltung von Wasser. Da das eingeformte Prepreg normalerweise bei Temperaturen über 100 °C, beispielsweise bei 130 bis 200 °C ausgehärtet wird, wird durch das gasförmig entweichende Wasser die Ausbildung einer dichten, geschlossenen Oberfläche behindert. Die Rohbauteile weisen daher in der Regel eine sehr schlechte Oberflächengüte auf.

Um die für den Kabinenbereich gewünschte Farbgebung und Struktur der Bauteiloberfläche zu erreichen, müssen die Bauteile anschließend lackiert oder mit Folie kaschiert werden. Hierfür ist jedoch eine hohe Oberflächengüte notwendig. Diese wird üblicherweise durch Spachteln und anschließendes Schleifen des Bauteils erreicht, wobei diese Verfahrensschritte gegebenenfalls wiederholt werden müssen.

Dies erfordert einen sehr hohen Zeit- und Arbeitsaufwand und ist dadurch auch mit hohen Kosten verbunden.

Um diese Arbeitsschritte einzusparen, ist es wünschenswert ein Inmould-Coating einzusetzen. Inmould-Coating ist eine Oberflächenbeschichtung, die vor dem Einformen und Aushärten des Prepregaufbaus in die Form appliziert wird oder sich während des Formgebungsprozesses ausbildet. Das Inmould-Coating sollte die Oberflächenqualität des Rohbauteils so verbessern, dass es ohne aufwendige Vorbereitung lackiert oder kaschiert werden kann. Darüber hinaus müssen die FST-Anforderungen weiterhin erfüllt sein.

Bekannt sind lösemittelbasierte Inmould-Coating-Systeme, welche vor dem Einlegen des Prepreg auf der Formoberfläche appliziert werden. Der Einsatz dieser Systeme im Vakuumsackverfahren zeigt jedoch nicht die gewünschten Ergebnisse. Bedingt durch die geometrische Gestalt der Form wird das Lösemittel in einigen Bereichen der Form durch das Vakuum nur unzureichend entfernt. Das führt bei der anschließenden Aushärtung bei erhöhten Temperaturen zu Blasen- und Kraterbildung auf der Oberfläche des Bauteils.

Im Heißpressverfahren sind lösemittelbasierte Inmould-Coating-Systeme nicht einsetzbar, da die Temperatur der Formen weit über den Siedepunkten der üblicherweise eingesetzten Lösemittel liegt. Durch die hohe Temperatur verdampft das Lösemittel sofort aus dem System, so dass kein gleichmäßiger Film erhalten wird.

Eine weitere Möglichkeit sind lösemittelfreie Systeme als Inmould-Coating. Ein Beispiel hierfür sind Gelcoats, welche zur Vergütung von Epoxidharzlaminaten eingesetzt werden.

Es ist Aufgabe der vorliegenden Erfindung, die Oberflächenqualität von ausgehärteten Bauteilen aus Faser-Kunststoff-Verbundwerkstoffen zu verbessern. Insbesondere soll die Erfindung die Oberflächenqualität von Bauteilen verbessern, welche aus Prepreg hergestellt werden.

Diese Aufgabe wird durch die Verwendung eines substratgestützten Polymerfilms gemäß Anspruch 1 sowie das Verfahren gemäß Anspruch 14 gelöst. Besondere Ausführungsformen werden in den Unteransprüchen und der Beschreibung angegeben.

Erfindungsgemäß wird zur Herstellung des substratgestützten Polymerfilms eine Harzmatrix eingesetzt, welche mindestens ein di- oder polyfunktionelles aromatisches organisches Cyanat und mindestens einen di- oder polyfunktionellen aromatischen Alkohol in Mengenanteilen, die ein molares Verhältnis der OCN-Gruppen zu OH-Gruppen in den Ausgangsmaterialien der Harzmatrix zwischen 95 : 5 und 70 : 30 gewährleisten, sowie mindestens einen Füllstoff enthält.

Dabei werden bevorzugt Mengenanteile an Cyanatkomponente und Alkoholkomponente eingesetzt, welche ein molares Verhältnis der OCN-Gruppen zu OH-Gruppen in den Ausgangsmaterialien der Harzmatrix zwischen 93 : 7 und 75 : 25 und besonders bevorzugt zwischen 91 : 9 und 80 : 20 gewährleisten.

Die Harzmatrix in den erfindungsgemäßen Polymerfilmen weist einen Vernetzungsgrad unterhalb ihres Gelpunkts auf. Dies ermöglicht eine Verarbeitung bzw. eine Aushärtung im Bereich zwischen ca. 100 °C und 200 °C. Durch den Einsatz der in der Patentanmeldung DE 102006041037.8 beschriebenen Harzmatrizes weisen die Polymerfilme außerdem eine gute Lagerstabilität und eine geringe Sprödigkeit auf. Die aus den erfindungsgemäßen Polymerfilmen durch Aushärtung erhaltenen Materialien zeigen eine hohe Flammfestigkeit, dadurch dass im Brandfall die Wärmefreisetzungsraten niedrig sind, die Rauchgasdichte gering ist und die gebildeten Brandgase eine geringe Toxizität aufweisen.

Das Auffinden geeigneter Cyanatharzmatrizes zur Verwendung in der vorliegenden Erfindung war schwierig. Denn besonders flammfeste Cyanatharze auf der Basis von Phenol-Novolaken wie z.B. PT-Harze der Firma Lonza haben nach vollständiger Aushärtung sehr hohe Glasübergangstemperaturen. Um einen vollständigen Umsatz an Cyanatgruppen zu erreichen, ist es daher erforderlich, hohe Härtungstemperaturen anzuwenden. Es ist zwar möglich, bei tiefen Temperaturen zu härten, denn die Reaktion kann beispielsweise durch Verwendung herkömmlicher Katalysatoren wie z.B. Metall-Acetylacetonat-Komplexe beschleunigt werden. Allerdings wird durch den Einsatz derartiger Katalysatoren die maximale Glasübergangstemperatur nicht herabgesetzt. Bei Härtungstemperaturen weit unter der Härtungstemperatur, welche für den maximalen Umsatz an OCN-Gruppen erforderlich ist, friert die Reaktion bei einem bestimmten OCN-Umsatz ein. Dieser Umsatz ist abhängig von der Härtungstemperatur bzw. deren Abstand von der maximalen Glasübergangstemperatur, d.h. von der Glasübergangstemperatur bei maximalem OCN-Umsatz. Unterhalb dieses Umsatzes jedoch sind Cyanatnetzwerke spröde.

Deshalb hätte nach anderen Katalysatoren gesucht werden können, welche zugleich Netzwerkmodifikatoren darstellen. Sie sollen das Netzwerk aufweiten und zugleich die Vernetzungsreaktion der Cyanatharze (Trimerisierung) katalysieren. Durch eine Netzwerkaufweitung würde die Glasübergangstemperatur herabgesetzt, so dass Härtungstemperaturen gewählt werden könnten, welche unter der Temperatur liegen, welche reine Cyanatharze benötigen. Ebenso könnte damit vermieden werden, dass die oben beschriebene Versprödung durch zu geringen Umsatz an OCN-Gruppen auftritt.

Diese Suche erwies sich jedoch als problematisch. Der in der Literatur beschriebene Zusatz von monofunktionellen Phenolen erscheint beispielsweise nicht vielversprechend. Monofunktionelle Phenole wie sie nach dem Stand der Technik eingesetzt werden bei der Reaktion in das Polymer eingebaut.

Der zugrunde liegende Mechanismus ist sehr komplex. Es wurde festgestellt, dass die Zahl der OH-Gruppen trotz des Einbaus der Phenole konstant bleibt. Der Grund ist folgender: für jede einreagierte OH-Gruppe wird an einer anderen Stelle eine OH-Gruppe freigesetzt. Der Effekt des monofunktionellen Phenols ist daher der, dass aus einer trifunktionellen Vernetzungsstelle eine difunktionelle Verknüpfung wird, da die OH-Gruppe ein Netzwerkkettenende bildet. Dadurch wird durch monofunktionelle Phenole die Netzwerkdichte übermäßig stark reduziert. Sie setzen somit die Glasübergangstemperatur deutlich über jedes wünschenswerte Maß hinaus herab und eignen sich daher nicht für die Zwecke der vorliegenden Erfindung.

Außerdem findet man in der Harzmatrix einen unerwünscht hohen Solgehalt. Ein weiterer Nachteil liegt darin, dass Komponenten mit relativ hoher Flüchtigkeit in der Harzmatrix verbleiben, welche später ausgasen können. Dies ist wiederum zu vermeiden, da wie bereits oben beschrieben die Folge eine ungenügende Oberflächenqualität der erfindungsgemäßen Beschichtung beispielsweise durch Blasenbildung auf oder an der Oberfläche sein kann. Darüber hinaus sind die Ausgangskomponenten flüchtig, was zu Problemen bei der Verarbeitung und Handhabung führen kann.

Aufgrund der Anwesenheit von Hydroxygruppen in der Harzmatrix war außerdem damit zu rechnen, dass die Vernetzungsreaktion zum Polymerfilm zumindest über längere Zeiträume, wie sie bei einer Lagerung auftreten können, nicht wie erforderlich vor dem Erreichen des Gelpunkts zum Stillstand kommt, sondern bis zu einem Vernetzungsgrad abläuft, der weit über dem Gelpunkt liegt. In diesem Fall ist Polymerfilm nicht mehr homogen aufschmelzbar und damit nicht mehr im Sinn der Erfindung verarbeitbar. Eine gute Lagerstabilität ist jedoch unbedingt erforderlich, da die Polymerfilme, welche erfindungsgemäß unter Verwendung der Harzmatrizes hergestellt werden, häufig über einen längeren Zeitraum gelagert werden müssen, bevor sie in die endgültige Aushärtungsstufe überführt werden.

Die Wahl der als Ausgangskomponente für die Harzmatrix einzusetzenden multifunktionellen Cyanate ist nicht kritisch. Prinzipiell kann jeder mindestens bifunktionelle aromatische Cyanatkörper eingesetzt werden. Bevorzugt werden zur Herstellung der Harzmatrix ein oder mehrere di- oder polyfunktionelle aromatische organische Cyanate eingesetzt, welche ausgewählt sind aus den aromatischen Cyanaten der Formel I 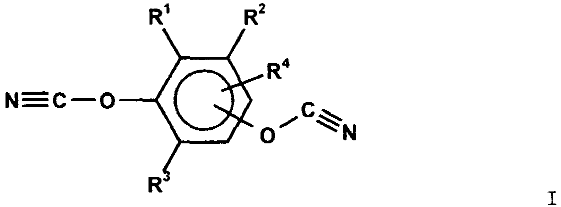 worin R¹ bis R⁴ unabhängig von einander Wasserstoff, ein geradkettiges oder verzweigtes C₁-C₁₀-Alkyl, C₃-C₈-Cycloalkyl, C₁-C₁₀-Alkoxy, Halogen, Phenyl oder Phenoxy ist, wobei die Alkyl- oder Arylgruppen fluoriert oder teilfluoriert sein können,
aus den aromatischen Cyanaten der Formel II 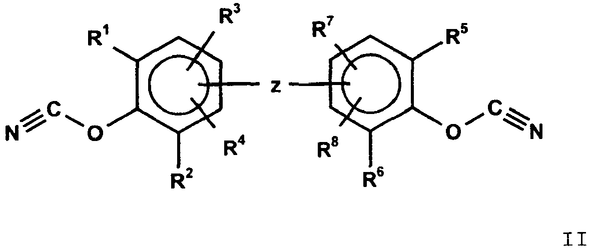 worin R⁵ bis R⁶ wie R¹ bis R⁴ sind und z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂ oder ein Rest mit der Formel IIa, IIb oder IIc 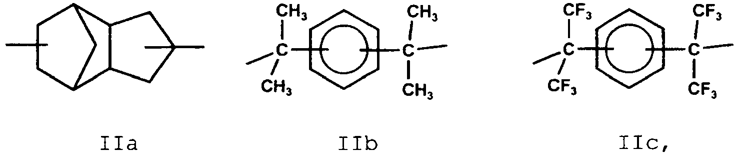 oder aus den aromatischen Cyanaten der Formel III 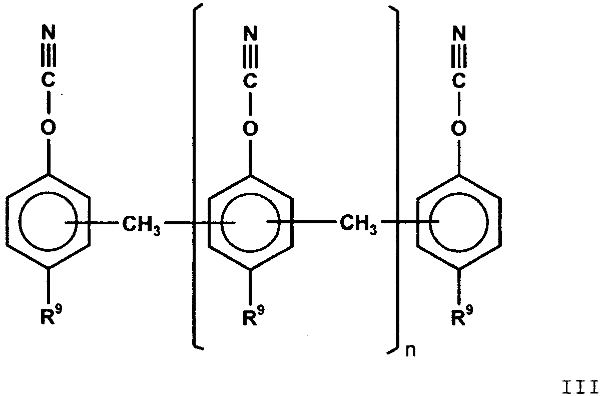 worin R⁹ Wasserstoff oder C₁-C₁₀-Alkyl ist und n einen Wert von 0 bis 20 darstellt. Die genannten Cyanate können als Monomere oder als vorvernetzte Polymere, allein oder in Mischungen untereinander oder im Gemisch mit weiteren monofunktionellen oder polyfunktionellen Cyanaten eingesetzt werden.

Besonders bevorzugt werden zur Herstellung der Harzmatrix ein oder mehrere di- oder polyfunktionelle aromatische organische Cyanate eingesetzt, welche ausgewählt sind aus Novolak-Cyanaten, Bisphenol-A-Dicyanatderivaten, 4,4'-Ethylidendiphenyldicyanaten oder Verbindungen mit der Formel III 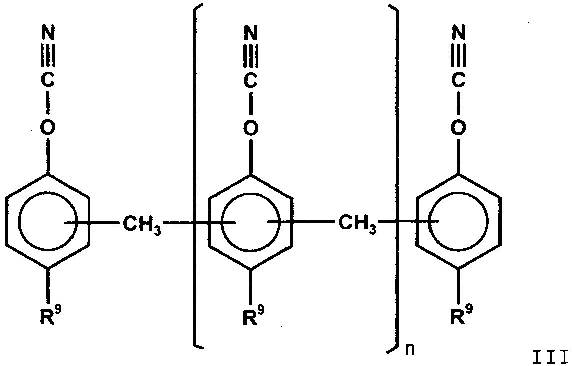 worin n gleich 1, 2 oder 3 ist, R⁹ ein Wasserstoff ist und die Methylengruppe jeweils in ortho-Position zur Cyanatgruppe steht.

Die einzusetzenden di- oder polyfunktionellen (multivalenten) aromatischen Alkohole sind vorzugsweise Verbindungen der Formeln IV 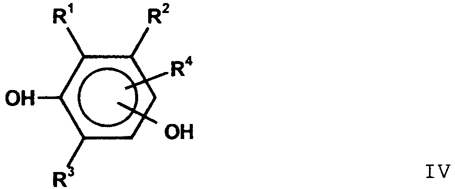 worin R¹ bis R⁴ unabhängig von einander Wasserstoff, ein geradkettiges oder verzweigtes C₁-C₁₀-Alkyl, C₃-C₈-Cycloalkyl, C₁-C₁₀-Alkoxy, Halogen, Phenyl oder Phenoxy ist, wobei die Alkyl- oder Arylgruppen fluoriert oder teilfluoriert sein können,
Verbindungen der Formel V 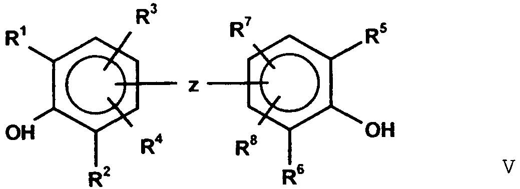 worin R⁵ bis R⁶ wie R¹ bis R⁴ sind und z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂ oder ein Rest mit der Formel IIa, IIb oder IIc 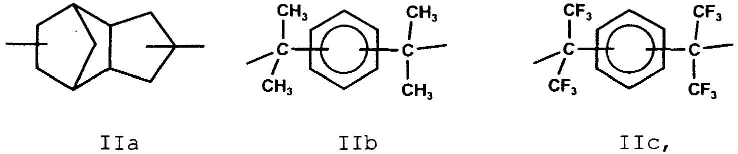 oder Verbindungen der Formel VI 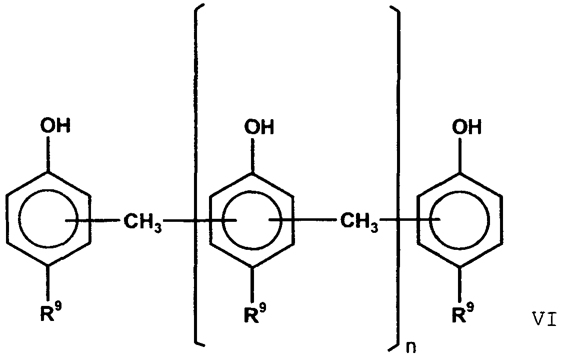 worin R⁹ Wasserstoff oder C₁-C₁₀-Alkyl ist und n einen Wert von 0 bis 20 darstellt. Die genannten Alkohole können auch als Monomere oder als vorvernetzte Polymere, allein oder in Mischungen untereinander oder im Gemisch mit weiteren mono-, di- oder polyfunktionellen Alkoholen eingesetzt werden.

Bevorzugt handelt es sich bei den multivalenten aromatischen Alkoholen um di- oder polyfunktionelle Phenole. Es können aber beispielsweise auch kondensierte Aromaten eingesetzt werden wie beispielsweise Naphtholderivate. Besonders bevorzugt werden aromatische difunktionelle Alkohole eingesetzt, bei denen die Hydroxygruppe jeweils direkt an den aromatischen Ring gebunden ist. Bevorzugt sind Bisphenole wie beispielsweise Bisphenol A, 4,4'-Ethylidendiphenol und Bishydroxyphenylsulfid.

Obwohl mit den aromatischen Alkoholen wie oben definiert Verbindungen eingesetzt werden, deren katalytische Wirkung eine Weiterreaktion der Harzmatrix erwarten läßt, wurde überraschenderweise Latenz erreicht.

Latenz bedeutet in diesem Zusammenhang, daß nach der Temperung die Vernetzungsreaktion der Harzmatrix zum Polymerfilm für längere Zeiträume, wie sie bei einer Lagerung auftreten können, vor dem Erreichen des Gelpunkts zum Stillstand kommt. In diesem Fall ist der Polymerfilm noch homogen aufschmelzbar und damit im Sinn der Erfindung verarbeitbar.

Diese Latenz ermöglicht die Fertigung, den Transport und die Lagerung der erfindungsgemäß unter Verwendung der Harzmatrizes hergestellten Polymerfilme.

Durch die erfindungsgemäße Verwendung der Harzmatrix, in welcher die oben definierte Cyanatkomponente mit den oben definierten multivalenten Phenolen modifiziert werden, wird die Aushärtung der Polymerfilme der vorliegenden Erfindung bei moderaten Temperaturen beispielsweise im Bereich von 100 °C bis 200 °C möglich.

Anders als bei der bekannten Modifikation von Cyanaten mit Epoxiden bleibt die intrinsische Flammfestigkeit erhalten. Daher sollen die erfindungsgemäß verwendete Harzmatrix und der erfindungsgemäße Polymerfilm vorzugsweise frei von Epoxiharzbestandteilen sein.

Gegebenenfalls kann die Reaktivität der erfindungsgemäß eingesetzten Harzmartix durch Beigabe bekannter Katalysatoren wie z.B. eines Metallacetylacetonats erhöht werden.

Die erfindungsgemäß verwendeten Harzmatrix weist bereits durch ihre Netzwerkstruktur (infolge der heteroaromatischen Struktur und des hohen Stickstoffgehalts) eine intrinsische Flammfestigkeit auf. Sie kombiniert eine niedrige Wärmefreisetzungsrate mit einer geringen Rauchgasdichte und einem geringem Anteil toxischer Gase im Brandfall. Um spezielle Anforderungen insbesondere die Anforderungen an die FST-Eigenschaften (**F**lammability, **S**moke, **T**oxicity) im Kabinenbereich der zivilen Luftfahrt zu erfüllen, können die erfindungsgemäßen substratgestützten Polymerfilme ein oder mehrere zusätzliche Flammschutzmittel aufweisen. Bevorzugt sind anorganische Flammschutzmittel, halogen-, stickstoff- oder borhaltige Flammschutzmittel, intumeszierende Flammschutzmittel oder deren Gemische.

Geeignete anorganische Flammschutzmittel sind beispielsweise nicht brennbare anorganische Füllstoffe wie z.B. Oxide, Hydroxide, Oxid-hydrate, Mischoxide, Sulfide, Sulfate, Carbonate, Phosphate, Fluoride von Mg, Ca, Sr, Ba, Ti, V, Cr, Mn, Fe, Co, Ni, Cu, Zn, Zr, Nb, Mo, Cd, W, Hg, Al, Ga, In, Si, Ge, Sn, Pb, Sb, Bi, Aluminiumoxide (-hydroxide), Magnesiumoxid, Aluminiumtrihydroxid, Magnesiumdihydroxid, Metallphosphate, Ammoniumpolyphoshate, Borate, Zinkborate, Natriumtetraborat Decahydrat, Borsäure, Antimontrioxid, Antimonpentoxid, roter Phosphor, natürliche oder synthetische Siliciumoxide wie z.B. Kieselgur, Kieselerde, Quarz, Cristobalit, Silikate, Talkum, Kaolin, Glimmer, Asbest, Bimsmehl, Perlite, Feldspat, Mullit, Wollastonit, Vermiculite, Basalt, Schiefermehl, Glasmehl, Lava oder mit Quarz verwachsene Al-Silikate, synthetische Siliciumoxide wie z.B. pyrogene Kieselsäure, gefällte Kieselsäure, Siliciumdioxide, Kieselgele, Quarzgut, Schichtsilikate, Bentonite, Sulfate der Metalle der 2. Hauptgruppe wie z.B. Calciumsulfat, Magnesiumsulfat, Bariumsulfat, synthetische und natürliche Carbonate wie z.B. Calciumcarbonat, Kreide, Calcit oder Dolomit, Siliciumcarbid, Steinwolle, Graphit, Glaskugeln, Glashohlkugeln, Faserfüllstoffe wie z.B. Asbest, anorganische Pigmente oder Farbmittel.

Geeignete halogenhaltige Flammschutzmittel sind beispielsweise Decabromdiphenyloxid, Ethan-1,2-bis(pentabromphenol), Ethylenbis-tetrabromphthalimid, bromiertes Polystyrol, Tribromdiphenylether, Tetrabromdiphenylether, Pentabromdiphenylether, Hexabromdiphenylether, Heptabromdiphenylether, Octabromdiphenylether, Nonabromdiphenylether, Decabromdiphenylether, Tetrabrombisphenol A und seine Derivate, polybromierte Biphenyle wie z.B. Decabrombyphenyl, Hexabromcyclododecan, Tetrabromphthalsäureanhydrid (TBPA), TBPA-diester/ether Ethylenbis(tetrabromphthalimide) (EBTBP), Salze von Tetrabromphthalaten, Dibromethyldibromcyclohexan, Ethylen-bis(dibromnorbornandicarboximid), Dibromneopentylglycol (DBNPG), Tribromneopentylalkohol (TBNPA), Vinylbromid (VBr), 2,4,6-Tribromphenol (TBP); Bis(tribromphenoxy)ethan (HBPE); Tribromophenylallylether (TBP-AE), Poly(dibromphenylenoxid) (PDBPO), Pentabromethylbenzol (5BEB), Tetradecabromdiphenoxybenzol (TDBDPB), Poly(pentabrombenzylacrylate) (PBB-PA) und Polydibromstyrol (PDBS).

Geeignete stickstoffhaltige Flammschutzmittel sind beispielsweise Melamin oder Melaminsalze der Borsäure, Phosphorsäure oder anderer anorganischer Säuren.

Geeignete phosphorhaltige Flammschutzmittel sind beispielsweise Phosphorsäureester, Ammoniumpolyphosphat, Triphenylphosphat, Tricresylphosphat, Resorcinol-bis(diphenylphosphat), (2-((Hydroxymethyl)carbamyl)ethyl)phosphonsäuredimethylester, Tetraphenylresorcinolbis(diphenylphosphat) oder organische Phosphinate.

Geeignete borhaltige Flammschutzmittel sind beispielsweise Borsäure, Borax, Borate, Zinkborat, Bariummetaborat, Calciummetaborat, Natriumtetrafluorborat oder Kaliumtetrafluorborat.

Geeignete intumeszierende Flammschutzmittel sind beispielsweise reines Melamin, Melaminmonophosphat, Melaminpolyphosphat, Melamincyanurat, Melaminpyrophosphat, Melam (1,3,5-triazine-2,4,6-triamine-n-(4,6-diamino-1,3,5-triazine-2-yl), Melem (-2,5,8-triamino 1,3,4,6,7,9,9b - Heptaazaphenalen), [CAS-Nr 1502-47-2], Melon (poly [8-amino- 1,3,4,6,7,9,9b-Heptaazaphenalen-2,5-diyl)imino] oder expandierbarer Graphit.

Besonders bevorzugte Flammschutzmittel sind beispielsweise Oxide, Hydroxide, Oxid-hydrate und Borate von Al, Mg, Ti, Si, Sb, Fe und Zn, Glaskugeln oder Glashohlkugeln, Tetrabrombisphenol A, Tetradecabromdiphenoxybenzol, bromiertes Polystyrol, Polydibromstyrol (PDBS), Decabromdiphenylether, und seine Derivate, polybromierte Biphenyle und 2,4,6-Tribromphenol und Mischungen aus zwei oder mehreren der vorgenannten Flammschutzmittel.

In einer bevorzugten Ausführungsform der Erfindung werden der Harzmatrix ein oder mehrere weitere Stoffe zur Einstellung der Viskosität und der rheologischen Eigenschaften zugesetzt. Die erfindungsgemäß verwendete Harzmatrix allein kann eine Viskosität aufweisen, welche für die Weiterverarbeitung zum substratgestützten Polymerfilm zu gering ist. So können geeignete Stoffe eingesetzt werden, welche die Viskosität der Harzmatrix bzw. des Gemisches, welches erfindungsgemäß zur Herstellung des Polymerfilm eingesetzt wird, einstellen. Geeignete Stoffe sind beispielsweise Siliziumdioxid, keramische Materialien, organisch modifizierte Silikate. Die Stoffe können einzeln oder als Gemisch eingesetzt werden.

In einer weiteren bevorzugten Ausführungsform der vorliegenden Erfindung werden weitere Additive eingesetzt, welche die Eigenschaften der Erfindung beeinflussen. Dem Fachmann sind die üblicherweise zur Herstellung von Lacken und Beschichtungsstoffen eingesetzten Additive bekannt (vgl. "Lackadditive"; Bieleman, Johan; Wiley-VCH-Verlag GmbH, Weinheim, 1998). Geeignete Additive sind beispielsweise oberflächenmodifizierende Mittel insbesondere oberflächenspannungssenkende Mittel wie z.B. fluorkohlenstoffmodifizierte Polymere.

Um eine gleichmäßige und geschlossenen Oberfläche auf dem erfindungsgemäß beschichteten Bauteil zu erhalten, ist der erfindungsgemäß hergestellte Polymerfilm frei von Kunststoff-, Glas- oder Kohlefasern, insbesondere von Geweben und Gelegen.

In einer besonders bevorzugten Ausführungsform der Erfindung werden die zusätzlichen Stoffe mit einem Anteil von 0% bis 85 % , bevorzugt 5 % bis 75 % , besonders bevorzugt 10 % bis 70% bezogen auf die Masse des getemperten Polymerfilms eingesetzt.

In einer bevorzugten Ausführungsform der Erfindung werden zur Herstellung der Harzmatrix die Cyanatkomponente und die Alkoholkomponente in geeigneten Mengen in der Regel getrennt oder gemeinsam in einem geeigneten Lösemittel gelöst. Geeignete Mengen im Sinn der vorliegenden Erfindung sind solche Mengen an Cyanat- und Alkoholkomponenten, die das Erreichen der oben erwähnten Molverhältnisse von OCN-Gruppen zu OH-Gruppen gewährleisten. Geeignete Lösemittel für die Cyanat- und Alkoholkomponenten sind dem Fachmann bekannt; häufig eingesetzte Lösemittel sind z.B. Methylethylketon oder Aceton. Die getrennt bereiteten Lösungen werden anschließend vermischt.

In einer weiteren Ausführungsform der Erfindung kann die Cyanatkomponente auch lösemittelfrei bei milden Temperaturen (beispielsweise im Bereich zwischen 40 °C und 80 °C) aufgeschmolzen werden. Die Alkoholkomponente wird in einer zum Erzielen des erforderlichen Molverhältnisses geeigneten Menge zugesetzt.

Gegebenenfalls kann zur Beschleunigung der Vernetzung ein Katalysator zugesetzt werden beispielsweise ein Metall-acetylacetonat-Komplex.

Zur erfindungsgemäßen Herstellung des Polymerfilms werden der Harzmatrix ein oder mehrere weitere Stoffe zugesetzt. Diese können einer der Lösungen oder der einzigen bzw. der vereinten Lösung der Cyanat- und Alkoholkomponente zu einem beliebigen Zeitpunkt zugesetzt werden. Sofern in Abwesenheit von Lösemitteln gearbeitet wird, werden die weiteren Stoffe der lösemittelfreien Mischung oder einer der Ausgangskomponenten hierfür zugesetzt. Bei der Zugabe von Füllstoffen erfolgt in der Regel eine Dispergierung mit den üblichen Hilfsmitteln.

Vorzugsweise werden insbesondere die Füllstoffe der Cyanatkomponente zugesetzt bevor diese mit der Alkoholkomponente vereinigt wird, da durch das Rühren in dem hochviskosen Gemisch Wärme entsteht, welche die Reaktivität stark erhöht und im ungünstigsten Fall zur vollständigen Durchhärtung des gesamten Gemisches führen kann. Sodann wird die Alkoholkomponente zugesetzt.

Das Gemisch wird anschließend in Form einer Schicht auf ein geeignetes Substrat gebracht beispielsweise durch ein gleichmäßiges Verteilen des Gemisches auf dem Substrat. Dem Fachmann sind die üblichen Verfahren zum Aufbringen einer Schicht bekannt wie beispielsweise Rakeln, Rollen, Sprühen, Gießen, Tauchen, Ziehen, Auftragen mit Pinseln, Streichen oder Schleudern.

Das Gemisch wird auf ein Substrat aufgetragen, welches als Trägermaterial und Schutz für den Polymerfilm dient. Das Substrat wird nach dem Aufbringen des Polymerfilms auf Prepreg und bevorzugt vor dem Aushärten des Prepreg wieder vom Polymerfilm entfernt.

Als Trägermaterial eignen sich insbesondere Papiere oder Kunststofffolien, die sich von dem erfindungsgemäßen Polymerfilm abziehen lassen. Hierfür ist es günstig, Folien oder Papiere zu verwenden, welche aus Materialien bestehen, die eine kleine Oberflächenspannung gegenüber Wasser zeigen, also wasserabweisend sind, oder welche mit solchen Materialien beschichtet sind. Das Grundmaterial für Kunststofffolien ist bevorzugt ein Thermoplast besonders bevorzugt ein Polypropylen. Als Beschichtung eignet sich insbesondere eine ein- oder beidseitige Silikonbeschichtung.

Vorzugsweise wird das erfindungsgemäße Gemisch auf dem Substrat in einer Schichtdicke aufgebracht, welche gewährleistet, dass der erfindungsgemäß hergestellte Polymerfilm eine Dicke von 1 µm bis 500 µm, bevorzugt 1 µm bis 200 µm aufweist. Besonders bevorzugt ist es, wenn das Gemisch in einer Schichtdicke aufgebracht wird, welche gewährleistet, dass der Polymerfilm eine Dicke von 1 µm bis 150 µm, bevorzugter 1 µm bis 100 µm, am meisten bevorzugt 1 µm bis 70 µm aufweist.

Anschließend wird das als Schicht aufgetragene Gemisch bei einer Temperatur zwischen 40 °C und 160°C getempert. Durch das Tempern wird die Harzmatrix prepolymerisiert, d.h. vernetzt. Die Temperatur ist dabei so zu wählen, dass gegebenenfalls vorhandenes Lösemittel entfernt wird, der Gelpunkt der Harzmatrix jedoch nicht erreicht wird. Wenn eine thermoplastische Folie als Trägersubstrat verwendet wird, ist außerdem ist darauf zu achten, dass die Folie nicht erweicht.

Die Bedingungen des Temperns wie z.B. Temperatur und Dauer bestimmen den Prepolymerisierungs- bzw. Vernetzungsgrad. Dieser wird nach der jeweiligen Anforderung gewählt, wobei aber wie schon erwähnt darauf zu achten ist, dass er vor Erreichen des Gelpunkts liegt, so dass ein erneutes Aufschmelzen und somit eine spätere Formgebung möglich ist. Bevorzugt erfolgt das Tempern zwischen 40 °C und 160 °C, bevorzugt zwischen 50°C und 130°C besonders bevorzugt zwischen 60 °C und 100 °C.

Gegebenenfalls kann das Gemisch, welches zur erfindungsgemäßen Herstellung des Polymerfilms eingesetzt wird, ohne Vortrocknung in Bulkform gelagert werden, bevor es als Schicht ausgeformt wird. Unabhängig von der Form wird es während der Lagerung vorzugsweise gekühlt aufbewahrt, wobei die Temperaturen in der Regel bei -40 °C bis 0 °C, bevorzugt bei -26 °C, liegen.

Darüber hinaus kann der erfindungsgemäß hergestellte Polymerfilm eine leichte Klebrigkeit aufweisen, damit er beim Auflegen auf Prepreg, ein Rohbauteil oder eine Forminnenfläche haften bleibt. Die Klebrigkeit muß einerseits ausreichend sei, um ein Verrutschen zu verhindern. Andererseits muss sie gering genug sein, um den erfindungsgemäßen Polymerfilm leicht von der Oberfläche des Prepregs, des Bauteils oder der Form zu entfernen, ohne ihn dabei zu beschädigen oder zu zerstören. Die Klebrigkeit kann gegebenenfalls ohne weitere Schwierigkeiten mit den dem Fachmann bekannten Mitteln eingestellt werden.

Der erfindungsgemäß hergestellte substratgestützte Polymerfilm wird im erfindungsgemäßen Verfahren zur Oberflächenbeschichtung von Faser-Kunststoff-Verbundwerkstoffen, welche unter Einsatz von Prepreg hergestellt werden, eingesetzt, wobei der Polymerfilm vor dem Einformen und Aushärten des Verbundaufbaus harzseitig auf eine Prepregoberfläche aufgebracht wird, das Trägersubstrat entfernt wird und der um den Polymerfilm ergänzte Verbundaufbau anschließend einer erhöhten Temperatur zum Aushärten ausgesetzt wird.

Der Polymerfilm der vorliegenden Erfindung wird bei Temperaturen von 100 bis 200 °C, bevorzugt von 130 °C bis 190 °C, besonders bevorzugt von 150 °C bis 170 °C, ausgehärtet (entspricht der Aushärtetemperatur).

Bauteile aus Faser-Kunststoff-Verbundwerkstoffen inbesondere Interiorbauteile werden üblicherweise aus Prepreg im Crushed-Core-Verfahren, d.h. in Autoklav- oder Heißpressverfahren unter Druck hergestellt, wobei der Druck so gewählt wird, dass auch der Wabenkern leicht verformt wird. Der erfindungsgemäße substratgestützte Polymerfilm wird als Inmould-Coating in diesen Verfahren eingesetzt. Dabei kann dieser Polymerfilm beispielsweise erst kurz vor dem Aushärten auf den Prepregaufbau aufgebracht werden oder auch schon während der Herstellung des Prepregs auf das Prepreg selbst aufgebracht und gegebenenfalls mit ihm verbunden werden.

Der Polymerfilm der vorliegenden Erfindung kann beispielsweise in einem einstufigen Verfahren eingesetzt werden kann, in welchem der erfindungsgemäße substratgestützte Polymerfilm auf die Oberfläche eines Prepregaufbaus aufgebracht wird, dieser Aufbau nach dem Abzug des Substrats in eine Form eingepasst wird und nach der Aushärtung aus der Form genommen wird.

Der Polymerfilm der vorliegenden Erfindung kann beispielsweise auch in einem zweistufigen Verfahren eingesetzt werden, in welchem der Prepregaufbau zunächst in der Form ausgehärtet wird, nach dem Aushärten aus der Form genommen wird und dann der Polymerfilm auf das Bauteil aufgebracht wird, das mit dem Polymerfilm belegte Bauteil nach Abzug des Substrats nochmals in der Form ausgehärtet wird und das beschichtete Bauteil nach dem Aushärten aus der Form genommen wird.

Da der erfindungsgemäße substratgestützte Polymerfilm ein Ausgasen leicht flüchtiger Komponenten aus dem Prepregaufbau durch die Ausbildung eines sehr dichten und geschlossenen Films verhindert, kann er bevorzugt als Beschichtung von phenolharzhaltigem Prepreg in einem einstufigen Verfahren verwendet werden.

In einer besonderen Ausführungsform der vorliegenden Erfindung wird der Polymerfilm auf die Oberfläche eines Prepregaufbaus aufgebracht, der Prepregaufbau nach Abzug des Substrats in eine vorgeheizte Form verbracht, die Form mit Druck verpresst und der Prepregaufbau ausgehärtet. Bevorzugt ist ein Sandwichaufbau mit einem Wabenkern zwischen phenolharzhaltigen Prepreglagen und eine Aushärtungzeit von 2 bis 20 Minuten, besonders bevorzugt von 5 bis 15 Minuten, bei Temperaturen zwischen 100°C und 200 °C, besonders bevorzugt bei 140°C bis 170 °C, ganz besonders bevorzugt bei 160°C, und bei einem Druck von 1,5 bis 8 bar, besonders bevorzugt bei 4 bar.

Die FST-Eigenschaften eines gemäß der vorliegenden Erfindung beschichteten Faser-Kunststoff-Verbundwerkstoffbauteils können beispielsweise mit den für die Luftfahrt relevanten Standardprüfmethoden zur Flammfestigkeit geprüft werden wie z.B. International Standard ISO TC92/SC1 oder Airbus Direktive ABD0031.

Im Folgenden wird die Erfindung anhand von Beispielen näher erläutert.

### Beispiel 1: Herstellung des Polymerfilms

Die Cyanatkomponente wird entgast, bei geeigneten, milden Temperaturen aufgeschmolzen und bei Bedarf in Aceton gelöst. Die Alkoholkomponente wird separat in Aceton gelöst. Füllstoffe und Flammschutzmittel (vgl. Tabelle 1) werden zur Cyanatkomponente hinzugegeben. Anschließend werden die Komponenten zusammengegeben und unter Rühren vermischt. Gegebenenfalls wird die Viskosität des Gemisches durch Zugabe weiterer Füllstoffe oder Additive eingestellt. Die erhaltenen Gemische werden jeweils auf eine Seite einer beidseitig silikonisierten Folie aufgerakelt. Anschließend wird die so beschichtete Folie im Wärmeschrank bei Temperaturen zwischen 60 °C und 100 °C über einen Zeitraum von 1 Minute bis 40 Minuten getempert. Die Bedingungen des Temperns werden dabei abhängig von der eingesetzten Harzmatrix so gewählt, dass der Prepolymerisierungs- oder Vorvernetzungsgrad des Polymerfilms unter seinem Gelpunkt liegt.

**Tabelle 1:**

| Zusammensetzungen von Gemischen zur Herstellung des Polymerfilms | | | | | | | |
|---|---|---|---|---|---|---|---|
| **Beispiel** | **1a** | **1b** | **1c** | **1d** | **1e** | **1f** | **1g** |
| **Bestandteile** | **Menge in Massenanteilen** | | | | | | |
| **Cyanatkomponente** | | | | | | | |
| Oligo(3-methylen-1,5-phenylen)cyanat | 65 | 65 | 65 | 65 | 65 | 65 | 65 |
| 4,4'-Ethyliden-diphenyldicyanat | 25 | 25 | 25 | 25 | 25 | 25 | 25 |

| **Alkoholkomponente** | | | | | | | |
|---|---|---|---|---|---|---|---|
| Bishydroxyphenylsulfid | - | - | - | - | - | - | 10 |
| Bisphenol A | 10 | 10 | 10 | 10 | 10 | 10 | - |

| **Lösemittel** | | | | | | | |
|---|---|---|---|---|---|---|---|
| Aceton | - | - | - | - | - | - | n.B.* |

| **weitere Stoffe** | | | | | | | |
|---|---|---|---|---|---|---|---|
| fluorkohlenstoffmodifiziertes Polymer | 2 | 2 | 2 | 2 | 2 | 2 | 2 |
| organisches Phosphinat | 50 | 25 | 30 | 30 | - | 30 | |
| organophiler Bentonit | 10 | 10 | - | - | - | - | |
| Glashohlkugeln | - | - | - | - | - | 5 | |
| pyrogene Kieselsäure | - | - | 4 | 4 | 4 | 2 | 4 |
| Pigment | 5 | - | - | 5 | 5 | 5 | 5 |

| | | | | | | | |
|---|---|---|---|---|---|---|---|
| * nach Bedarf (n.B.) | | | | | | | |

### Beispiel 2: Herstellung eines beschichteten Interior-Bauteils für die Luftfahrt

Ein Nomex-Wabenkern wird auf beiden Seiten flächig mit phenolharzgetränkten Prepreglagen belegt. Ein Polymerfilm aus Beispiel 1 wird mit der Harzseite auf die Oberflächen dieses Aufbaus aufgelegt. Anschließend wird die Trägerfolie entfernt, der Aufbau in eine auf 160 °C geheizte Form eingebracht, die Form geschlossen. Es wird ein Druck von etwa 4 bar angelegt und das Bauteil bei 160 °C etwa 15 Minuten lang verpresst. Während der Presszeit formt sich der Aufbau in die Form ein und wird in dieser Form ausgehärtet. Danach wird das fertige Bauteil der Form entnommen.

## Patentansprüche

1. Verwendung eines substratgestützten Polymerfilms, umfassend einen Film aus einer Harzmatrix, die hergestellt ist unter Einsatz
(a) mindestens eines di- oder polyfunktionellen aromatischen organischen Cyanats und
(b) mindestens eines di- oder polyfunktionellen aromatischen Alkohols
in Mengenanteilen, die ein molares Verhältnis der OCN-Gruppen zu OH-Gruppen in den Ausgangsmaterialien zur Herstellung des Prepolymeren zwischen 95:5 und 70:30 gewährleisten, sowie
(c) mindestens eines Füllstoffes,
wobei die Harzmatrix einen Vernetzungsgrad aufweist, der unterhalb ihres Gelpunktes liegt und
wobei der Film frei ist von Kunststoff-, Glas- oder Kohlefasern,
als Oberflächenbeschichtung von Faser-Kunststoff-Verbundbauteilen, die nach dem Crushed-Core-Verfahren aus Verbundaufbauten, welche einen Kern und mindestens eine Prepreg-Auflage enthalten, hergestellt sind, **dadurch gekennzeichnet, dass** der Polymerfilm vor dem Aushärten des Verbundaufbaus und ggf. vor dessen Einformen harzseitig auf eine Prepreg-Oberfläche aufgebracht wird, wobei das Aushärten unter Druckeinwirkung und erhöhter Temperatur erfolgt.

2. Verwendung nach Anspruch 1, worin das di- oder polyfunktionelle aromatische organische Cyanat oder eines dieser Cyanate ausgewählt ist unter aromatischen Cyanaten der Formel I 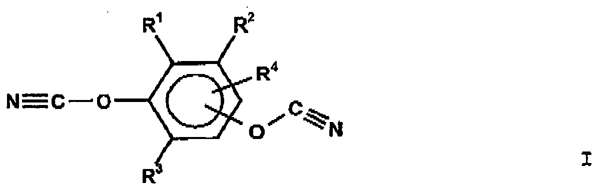 worin R¹ bis R⁴ unabhängig voneinander Wasserstoff, geradkettiges oder verzweigtes C₁-C₁₀-Alkyl, C₃-C₈-Cycloalkyl, C₁-C₁₀-Alkoxy, Halogen, Phenyl oder Phenoxy ist, wobei die Alkyl- oder Arylgruppen fluoriert oder teilfluoriert sein können,
unter aromatischen Cyanaten der Formel II 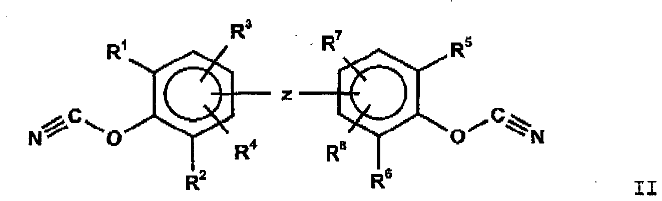 worin R⁵ bis R⁸ wie R¹ bis R⁴ sind und z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂ ist oder 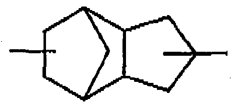 oder 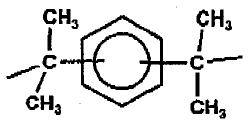 oder 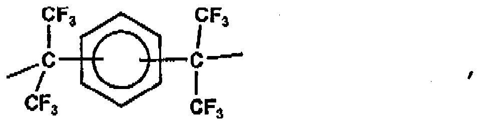 und unter aromatischen Cyanaten der Formel III 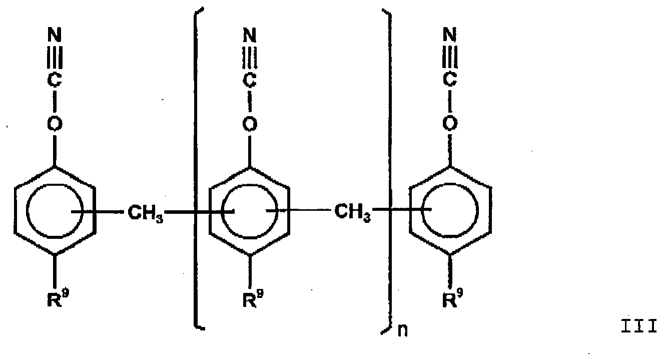 worin R⁹ Wasserstoff oder C₁-C₁₀-Alkyl ist und n einen Wert von 0 bis 20 darstellt,
sowie unter Prepolymeren der vorgenannten Cyanate.

3. Verwendung nach Anspruch 1 oder 2, **dadurch gekennzeichnet, dass** der di- oder polyfunktionelle aromatische Alkohol oder einer dieser Alkohole ausgewählt ist unter Verbindungen mit den in Anspruch 2 für Cyanate angegebenen Strukturen I bis III, in denen die Cyanatgruppen durch Hydroxygruppen ersetzt sind.

4. Verwendung nach einem der voranstehenden Ansprüche, **dadurch gekennzeichnet, dass** das di- oder polyfunktionelle organische Cyanat oder eines dieser Cyanate ausgewählt ist unter Novolak-Cyanaten, dem Bisphenol A-Dicyanatderivat, 4,4'Ethylidendiphenyldicyanat und Verbindungen mit der Formel III gemäß Anspruch 2, worin n 1, 2 oder 3 ist, R⁹ Wasserstoff ist und die Methylengruppe jeweils in ortho-Position zur Cyanatgruppe steht und/oder dass der di- oder polyfunktionelle aromatische Alkohol oder einer dieser Alkohole ausgewählt ist unter Bisphenol A und Bishydroxyphenylsulfid.

5. Verwendung nach einem der voranstehenden Ansprüche, worin der oder mindestens einer der Füllstoffe ausgewählt ist unter phosphororganischen Salzen.

6. Verwendung nach einem der voranstehenden Ansprüche, worin der oder mindestens einer der Füllstoffe ausgewählt ist unter Siliciumdioxid, keramischen Materialien, organisch modifizierten Silikonen oder Siloxanen oder Mischungen hiervon.

7. Verwendung nach einem der voranstehenden Ansprüche, worin der Füllstoffanteil der Mischung bis zu 50 Masse-% beträgt.

8. Verwendung nach einem der voranstehenden Ansprüche, worin der Polymerfilm ein oder mehrere Flammschutzmittel aufweist, welche aus der Gruppe der anorganischen, halogenhaltigen, stickstoffhaltigen, borhaltigen oder intumeszierenden Flammschutzmittel ausgewählt sind.

9. Verwendung nach Anspruch 8, worin mindestens ein Flammschutzmittel ausgewählt ist aus Oxiden, Hydroxiden, Oxid-hydraten, Boraten von Al, Mg, Ti, Si, Sb, Fe oder Zn, Glaskugeln, Glashohlkugeln, Tetrabrombisphenol A, Tetradecabromdiphenoxybenzol, bromiertem Polystyrol, Polydibromstyrol (PDBS), Decabromdiphenylether oder seinen Derivaten, polybromierten Biphenylen oder 2,4,6-Tribromphenol.

10. Verwendung nach einem der voranstehenden Ansprüche, worin die Mischung mindestens einen weiteren Zusatz aufweist.

11. Verwendung nach Anspruch 10, worin der Zusatz ausgewählt ist unter oberflächenmodifizierenden Mitteln.

12. Verwendung nach einem der voranstehenden Ansprüche, worin der Polymerfilm als Substrat eine Trägerfolie aufweist, welche aus einem thermoplastischen Material besteht.

13. Verwendung nach einem der voranstehenden Ansprüche, worin der Polymerfilm eine Dicke von 1 bis 500 µm aufweist.

14. Verfahren zur Oberflächenbeschichtung von Faser-Kunststoff-Verbundbauteilen, **dadurch gekennzeichnet, dass**
a) ein substratgestützter Polymerfilm umfassend eine auf ein Substrat aufgebrachte Harzmatrix, die hergestellt ist unter Einsatz
(i) mindestens eines di- oder polyfunktionellen aromatischen organischen Cyanats und
(ii) mindestens eines di- oder polyfunktionellen aromatischen Alkohols in Mengenanteilen, die ein molares Verhältnis der OCN-Gruppen zu OH-Gruppen in den Ausgangsmaterialien zur Herstellung des Prepolymeren zwischen 95:5 und 70:30 gewährleisten, sowie
(iii) mindestens eines Füllstoffes,
wobei die Harzmatrix einen Vernetzungsgrad aufweist, der unterhalb ihres Gelpunktes liegt und wobei der Film frei ist von Kunststoff-, Glas- oder Kohlefasern,
harzseitig auf die Prepregoberfläche eines Faser-Kunststoff-Verbundaufbaus aufgebracht wird,
b) das Substrat vor dem Aushärten vom Polymerfilm entfernt wird und
c) der um den Polymerfilm ergänzte Verbundaufbau bei einer Temperatur im Bereich von 130 bis 200 °C und einem Druck im Bereich von 1,5 bis 8 bar für einen Zeitraum von 5 bis 30 Minuten umgeformt und ausgehärtet wird.

15. Verfahren nach Anspruch 14, **dadurch gekennzeichnet, dass** der Polymerfilm vor dem Einformen auf den Verbundaufbau aufgelegt wird.

16. Verfahren nach Anspruch 14 , **dadurch gekennzeichnet, dass** der Polymerfilm zuerst in die Form eingelegt wird und dann der Verbundaufbau auf den in der Form liegenden Polymerfilm aufgelegt wird.

## Claims

1. Use of a polymer film lying on a substrate, comprising a film formed of a resin matrix, obtained using
(a) at least one di- or polyfunctional aromatic organic cyanate and
(b) at least one di- or polyfunctional aromatic alcohol
in proportions ensuring a molar ratio of the OCN groups to the OH groups ranging between 95:5 and 70:30 in the starting materials intended for the manufacture of the prepolymer and
(c) at least one filling material,
in which the resin matrix exhibits a crosslinking degree, that is less than its gel point and where the film does not contain any plastic, glass or carbon fibres,
as a surface coating for fibre-plastic compound components, obtained using the crushed core process from compound structures, including a core and at least one prepreg support, **characterised in that** the polymer is applied on a prepreg surface before the compound structure has hardened and possibly before it is moulded on the resin, where it hardens under the effect of pressure and a temperature rise.

2. The use according to claim 1, where the di- or polyfunctional organic aromatic cyanate or one of its cyanates, is selected among the aromatic cyanates of formula 1 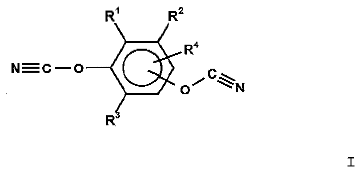 where R¹ to R⁴ represent independently from one another, hydrogen, a linear or branched C₁-C₁₀-alkyl, a C₃-C₈-cycloalkyl, a C₁-C₁₀-alkoxy, a halogen, a phenyl or a phenoxy, where the alkyl or aryl group can be fluorinated or partially fluorinated,
among the aromatic cyanates of formula II 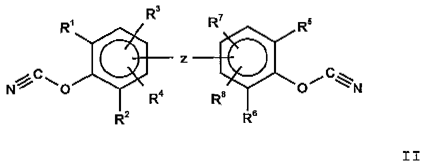 where R⁵ to R⁶ are like R¹ to R⁴ and z is a chemical bond, SO₂, CF₂, CH₂, CHF, CH(CH₃), isopropylene, hexafluoroisopropylene, C₁-C₁₀-alkylene, O, NR⁹, N=N, CH-CH, COO, CH=N, CH=N-N=CH, alkylene-oxyalkylene with C₁-C₈-alkylene, S, Si(CH₃)₂
or 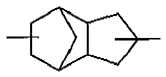 or 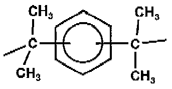 or 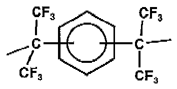 and among the aromatic cyanates of formula II 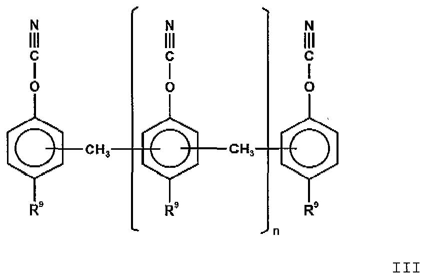 where R⁹ is hydrogen or a C₁-C₁₀-alkyl and n represents a value ranging between 0 and 20,
as well as the prepolymers of the cyanates aforementioned.

3. The use according to claim 1 or 2, **characterised in that** the di- or polyfunctional aromatic alcohol or one of these alcohols is selected among the compounds having the structures I to III indicated in claim 2 for cyanates, where the cyanate groups are replaced with hydroxy groups.

4. The use according to one of the preceding claims, **characterised in** the di- or polyfunctional organic cyanate or one of these cyanates is selected among the novolak cyanates, the bisphenol A dicyanate derivative, 4,4' ethylidene diphenyl dicyanate and the compounds of formula III according to claim 2, where n equals 1, 2 or 3, R⁹ is hydrogen and the methylene group is respectively in ortho position with respect to the cyanate group and/or the di- or polyfunctional aromatic alcohol or one of these alcohols is selected among bisphenol A and bishydroxyphenyl sulfide.

5. The use according to one of the preceding claims, where the filling material or at least one of the filling materials is selected among phosphor organic salts.

6. The use according to one of the preceding claims, where the filling material or at least one of the filling materials is selected among silica, ceramic materials, organically modified silicones or siloxanes or the mixtures thereof.

7. The use according to one of the preceding claims, where the proportion of filling material of the combination may be as high as 50% in mass.

8. The use according to one of the preceding claims, where the polymer film includes one or several fire retardants, which are selected among the group of anorganic halogen-, nitrogen- or boron-containing or intumescent fire retardants.

9. The use according to claim 8, where at least one fire retardant is selected among oxides, hydroxides, oxyhydrates, Al, Mg, Ti, Si, Sb, Fe or Zn borates, glass balls, glass hollow balls, tetrabrombisphenol A, tetradecabromdiphenoxybenzol, brominated polystyrol, polydibromstyrol (PDBS), decabromdiphenylether or its derivatives, polybrominated biphenyls or 2,4,6-tribromphenol.

10. The use according to one of the preceding claims, where the mixture exhibits at least one other additive.

11. The use according to claim 10, where the additive is selected among surface-modifying means.

12. The use according to one of the preceding claims, where the polymer film has a support film as a substrate, which consists of a thermoplastic material.

13. The use according to one of the preceding claims, where the polymer film has a thickness of 1 to 500 µm.

14. A method of coating surfaces of fibre-plastic compound components, **characterised in that**
(a) a substrate-based polymer film, comprising a resin matrix applied to a substrate, obtained using
(i) at least one di- or polyfunctional organic aromatic cyanate and
(ii) at least one di- or polyfunctional aromatic alcohol in proportions ensuring a molar ratio of the OCN groups to the OH groups ranging between 95:5 and 70:30 in the starting materials intended for the manufacture of the prepolymer, as well as
(iii) at least one filling material, in which the resin matrix exhibits a crosslinking degree, that is less than its gel point and where the film does not contain any plastic, glass or carbon fibres,
is applied on the resin side of the prepreg surface of a fibre-plastic compound structure,
(b) the substrate is removed before the polymer film has hardened and
(c) the compound structure completed by the polymer film is transformed and hardened at a temperature in the range of 130 to 200°C and a pressure in the range of 1.5 to 8 bars for a period of 5 to 30 minutes.

15. The process according to claim 14, **characterised in that** the polymer film is applied to the compound structure before moulding.

16. The process according to claim 14, **characterised in that** the film polymer is first laid in the mould and the compound structure is applied to the polymer film laid into the mould.

## Revendications

1. Utilisation d'un film polymère reposant sur un substrat, comprenant un film constitué d'une matrice de résine, que l'on obtient à l'aide
(a) au moins d'un cyanate organique aromatique di- ou polyfonctionnel et
(b) au moins d'un alcool aromatique di- ou polyfonctionnel
dans des proportions garantissant un rapport molaire des groupes OCN aux groupes OH compris entre 95:5 et 70:30 dans les matériaux de départ destinés à la fabrication du prépolymère
(c) au moins d'un matériau de remplissage,
dans lequel la matrice de résine présente un degré de réticulation, qui est inférieur à son point de gel et où le film ne contient ni fibres de plastique, de verre ou de carbone,
comme enduction de surface pour composants composites fibre-plastique, que l'obtient avec le procédé noyau écrasé partir de structures composites, contenant un noyau et au moins un support préimprégné, **caractérisé en ce que** l'on applique le polymère sur une surface préimprégnée avant le durcissement de la structure composite et éventuellement avant son moulage sur la résine, où le durcissement se produit sous l'effet de la pression et d'une augmentation de la température.

2. Utilisation selon la revendication 1, où l'on choisit le cyanate aromatique organique di- ou polyfonctionnel ou l'un de ces cyanates, parmi les cyanates aromatiques de la formule 1 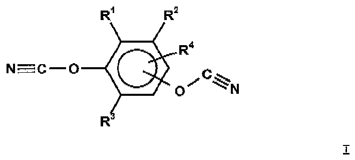 où R¹ à R⁴ représentent, indépendamment l'un de l'autre, de l'hydrogène, un alkyle C₁-C₁₀ linéaire ou ramifié, un cycloalkyle C₃-C₈, un alkoxy C₁-C₁₀, une halogène, un phényle ou un phénoxy, où les groupes alkyles ou aryles peuvent être fluorés ou partiellement fluorés,
parmi les cyanates aromatiques de la formule II 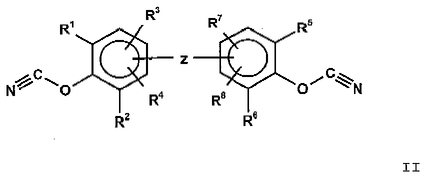 où R⁵ à R⁶ sont comme R¹ à R⁴ et z est une liaison chimique, SO₂, CF₂, CH₂, CHF, CH(CH₃), des isopropylene, des hexafluoroisopropylene, des alkyles C₁-C₁₀, O, NR⁹, N=N, CH=CH, COO, CH=N, CH=N-N=CH, des alkylène-oxy-alkylènes avec des alkylènes C₁-C₈, S, Si(CH₃)₂
ou bien 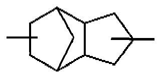 ou bien 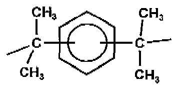 ou bien 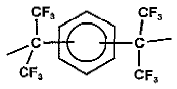 et parmi les cyanates aromatiques de la formule II 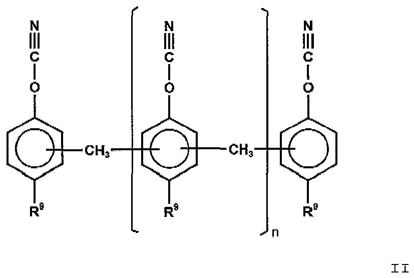 où R⁹ est de l'hydrogène ou bien un alkyle C₁-C₁₀ et n représente une valeur comprise entre 0 et 20,
de même que parmi les prépolymères des cyanates précités.

3. Utilisation selon la revendication 1 ou 2, **caractérisée en ce que** l'alcool aromatique di- ou polyfonctionnel ou l'un de ces alcools est choisi parmi les liaisons présentant les structures I à III indiquées à la revendication 2 pour les cyanates, où les groupes cyanates sont remplacés par les groupes hydroxy.

4. Utilisation selon l'une des revendications précédentes, caractérisée en ce l'on choisit le cyanate organique di- ou polyfonctionnel ou l'un de ces cyanates parmi les cyanates novolak, le dérivé de dicyanate bisphénol A, le dicyanate de 4,4' éthylidènediphényle et les liaisons de la formule III selon la revendication 2, où n est égal à 1, 2 ou 3, R9 est de l'hydrogène et le groupe méthylène est respectivement en position ortho par rapport au groupe cyanate et/ou que l'alcool aromatique di- ou polyfonctionnel ou l'un de ces alcools est choisi parmi le bisphénol A et le sulfure de bishydroxyphényle.

5. Utilisation selon l'une des revendications précédentes, où le matériau de remplissage ou au moins l'un des matériaux de remplissage est choisi parmi les sels phosphororganiques.

6. Utilisation selon l'une des revendications précédentes, où le matériau de remplissage ou au moins l'un des matériaux de remplissage est choisi parmi la silice, les matériaux céramiques, les siloxanes ou silicones organiquement modifiés ou les mélanges de ceux-ci.

7. Utilisation selon l'une des revendications précédentes, où la proportion en matériau de remplissage de la combinaison peut atteindre 50% en masse.

8. Utilisation selon l'une des revendications précédentes, où le film polymère contient un ou plusieurs retardateurs de flamme, qui sont sélectionnés parmi le groupe des retardateurs de flamme anorganiques, contenant un halogène, de l'azote ou du bore ou bien intumescents.

9. Utilisation selon la revendication 8, où au moins un retardateur de flamme est choisi parmi les oxydes, les hydroxydes, les oxy-hydrates, les borates de Al, Mg, Ti, Si, Sb, Fe ou Zn, les billes de verre, les billes creuses de verre, le tétrabrombisphénol A, le tétradécabromdiphénoxybenzol, le polystyrol bromé, le polydibromstyrol (PDBS), le décabromdiphényléther ou ses dérivés, les biphényles polybromés ou le 2,4,6-tribromphénol.

10. Utilisation selon l'une des revendications précédentes, où le mélange présente au moins un autre additif.

11. Utilisation selon la revendication 10, où l'additif est choisi parmi des moyens modificateurs de surface.

12. Utilisation selon l'une des revendications précédentes, où le film polymère présente un film support comme substrat , consistant en un matériau thermoplastique.

13. Utilisation selon l'une des revendications précédentes, où le film polymère présente une épaisseur de 1 à 500 µm.

14. Procédé d'enduction de surface de composants composites fibre-plastique, **caractérisé en ce que**
(a) un film polymère reposant sur un substrat, comprenant une matrice de résine appliquée sur un substrat, que l'on obtient à l'aide
(i) d'au moins un cyanate aromatique organique di- ou polyfonctionnel et
(ii) au moins d'un alcool aromatique di- ou polyfonctionnel dans des proportions garantissant un rapport molaire des groupes OCN aux groupes OH compris entre 95:5 et 70:30 dans les matériaux de départ destinés à la fabrication du prépolymère, de même que
(iii) d'au moins un matériau de remplissage, dans lequel la matrice de résine présente un degré de réticulation, qui est inférieur à son point de gel et où le film ne contient ni fibres de plastique, de verre ou de carbone,
est appliquée côté résine sur la surface de préimprégnation d'une structure composite fibre-plastique,
b) on retire le substrat avant le durcissement du film polymère et
c) la structure composite complétée par le film polymère est transformée et durcie à une température dans la fourchette de 130 à 200°C et une pression dans la fourchette de 1,5 à 8 bars pendant une période de 5 à 30 minutes.

15. Procédé selon la revendication 14, **caractérisé en ce que** le film polymère est appliqué sur la structure composite avant le moulage.

16. Procédé selon la revendication 14, **caractérisé en ce que** l'on commence par déposer le film polymère dans le moule et que l'on applique la structure composite sur le film polymère reposant dans le moule.
